# EUROPEAN PATENT SPECIFICATION

(11) **EP 0 588 184 B1**
(45) Date of publication and mention of the grant of the patent: **06.08.1997**
(21) Application number: 93114188.1
(22) Date of filing: 04.09.1993
(51) Int. Cl.: H04N 7/167

(54) **Method for access control**
Zugriffsteuerungsverfahren
Méthode de contrôle d'accès

(30) Priority: 14.09.1992 EP 92402503
(43) Date of publication of application: 23.03.1994
(73) Proprietor: THOMSON multimedia, 92400 Courbevoie (FR)
(72) Inventor: Diehl, Eric, F-67100 Strasbourg (FR); Naccache, David, F-94700 Maisons-Alfort (FR)
(74) Representative: Hartnack, Wolfgang, Dipl.-Ing.

(56) References cited:
- EP-A- 0 426 923
- EP-A- 0 428 252

## Description

The present invention relates to a method for access control.

### Background

In FR-A-2 654 237 a system of protection against the inhibition of writing in smart cards is described. This system may be not secure enough against hackers.

### Invention

It is one object of the invention to disclose a method of access control with improved security. This object is reached by the method disclosed in claim 1.

The invention can e.g. be used in PAY-TV systems, such as VIDEOCRYPT and EUROCRYPT.
Typically in a PAY-TV system there are two kinds of data packets which are transmitted via a decoder to a user, e.g. a smart card:
- packets containing information which will permit the decoder to descramble the video signal and possibly the sound signal/s. These data are returned to the decoder in a clear way only, if the card is entitled to access the current programme. In the EUROCRYPT terminology they are called ECM;
- packets containing information which will update the entitlements inside the smart card (memory) itself. In the current EUROCRYPT terminology, they are called EMM.

Document EP-A-0 426 923 discloses a similar Pay-TV system.

There is no interest for hackers to suppress the first type of packets (ECM). In that case, the decoder would never be able to descramble the picture and/or sound.

But according to the type of entitlement storage (EMM) performed inside the smart card it can be profitable to suppress the emission of the second type of packets to the smart card.

There are two main types of entitlement storage used:
- either the entitlement is stored with its beginning and ending dates;
- or simply the current state, authorized or not, is memorised.

The first method is very secure because when an EMM packet is discarded, the user is not re-entitled. But this method uses a lot of space inside the card's memory and is very expensive in time consumption. The second method uses a minimal amount of memory space in the smart card but is less secure than the previous one. If EMM is discarded, the user remains entitled.

Three attacks against the second method of storage could be used. These attacks are based on the assumption that the hacker has found a way to distinguish the two different types of data packet. The invention presents appropriate countermeasures.

### First Attack:

Once the card is authorized to descramble all the programmes, all packets of EMM type are discarded. By that way, the status of the entitlement can never be changed in the future and the hacker has gained an unlimited access to the programmes during all the card validity period.

The inventive countermeasure:
The smart card has to receive during a given period of time at least one EMM packet, even if this packet is not dedicated to the smart card. In case this condition is not respected, the smart card will not deliver anymore the right parameters (ECM) for descrambling. This inhibition can be either temporary or definitive.
The determination of the minimal period can be made by counting the number of packets of the first type received by the smart card.

### Second Attack:

The second attack is more sophisticated than the first one. In the first attack, the hacker simply discards every EMM packets. Due to cryptographical protection, it is assumed that the hacker has no way to distinguish a priori, if the packet is dedicated or not to his smart card. But by some eavesdropping he can determine a posteriori, if the packet was dedicated for his card. Once the hacker would have found an 'inactive' packet, he could discard every EMM packets and replace them by the 'inactive' packet. In that case once more the hacker would have gained unlimited access to the programmes.

The inventive countermeasure:
Inside the EMM packet a time related information is added. The packet must contain an information which will evolve with time and for which the smart card can easily check the evolution. If there is no evolution of this parameter between two successive EMM packets, the smart card will inhibit the delivering of descrambling parameters to the decoder. The following two methods can be used:
- Inside the packet there is a real time information, for instance the number of hundredths of seconds elapsed since midnight. The smart card will check that between two successive EMM packets this time information has increased. If the test is not successful, the smart card inhibits transfer of descrambling parameters to the decoder.
- Inside the packet, one byte is a copy of one defined byte of the control parameters used for descrambling. These parameters are delivered by the ECM packets and are by nature random. This method is easy to implement and the requested information is unpredictable for the hacker.

### Third Attack:

In a first step the hacker registers himself as an official subscriber. In a second step, he does not pay the new subscription fee and his card is black listed (i.e. the smart card will not deliver the right descrambling parameters to the decoder). In a third step, he requests his card to be white listed and records all the transactions performed between the decoder and the smart card until the smart card is authorized again. Next time his smart card will be black listed, he is able to play back the complete sequence (EMM and ECM) in order to validate his card.

The inventive countermeasure:
The concept is similar to the one used against Attack 2. Inside the EMM packets a time stamp information is added. This information will change slowly, for instance incremented by one each day. Once the smart card finds an EMM message dedicated to itself, the card will compare the time stamp information stored in the card. If the time stamp is greater or equal to the one stored, the action is performed and the memorised time stamp is replaced by the new one. Else the action is rejected and the smart card is inhibited.

In principle in the inventive method for access control scrambled video and/or audio signals together with cryptographically protected data are transmitted via decoder means to a receiver device - e.g. a smart card - the data containing related parameters for descrambling and entitlement updates for that specific receiver device or other receiver devices, whereby:
- said receiver device checks at least once in a predetermined time period, if any entitlement update is received, else said receiver device delivers no descrambling information to said decoder means
   and/or
- said entitlement updates contain a data field which evolves with time and said receiver device delivers no descrambling information to said decoder means, if it detects no respective evolution between two successive of said data fields.

Advantageous additional embodiments of the inventive method are resulting from the respective dependent claims.

### Drawing

A preferred embodiment of the invention is described with reference to the accompanying drawing, which shows in:

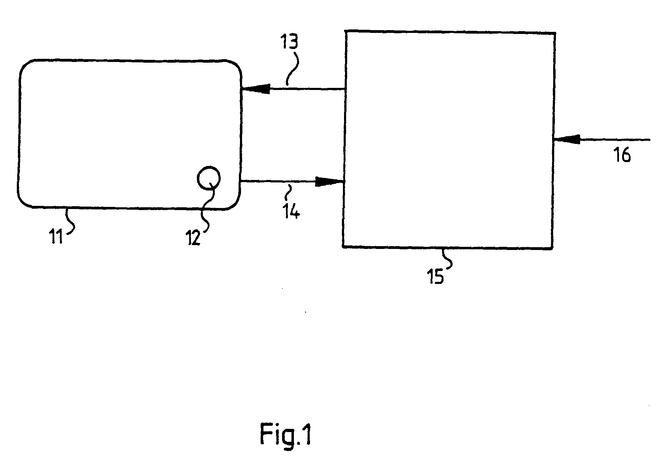

- Fig. 1: a pay-TV decoder with smart card.

### Preferred embodiments

In Fig. 1 scrambled video and/or audio signals together with cryptographically protected data are transmitted 16 via a pay TV decoder 15 to a smart card 11 which contains a memory and microcontroller chip 12. The data 13 containing parameters for descrambling and entitlement updates are sent from the decoder to the card. The card checks on its chip the validity of the received data 13 and delivers respective descrambling information 14 to decoder 15. This check is made as described above.

## Claims

1. Method for access control, in which scrambled video and/or audio signals together with cryptographically protected data are transmitted (16) via decoder means (15) to a receiver device (11) - e.g. a smart card - the data (13) containing related parameters for descrambling and entitlement updates for that specific receiver device or other receiver devices, **characterised in** that:
- said receiver device (11) checks at least once in a predetermined time period, if any entitlement update is received, else said receiver device delivers no descrambling information (14) to said decoder means (15) and/or
- said entitlement updates contain a data field which evolves with time and said receiver device (11) delivers no descrambling information (14) to said decoder means (15), if it detects no respective evolution between two successive of said data fields.

2. Method according to claim 1, **characterised in** that said data field is a transcription of the current local time.

3. Method according to claim 1, **characterised in** that said data field is a copy of one or more byte/s of said scrambling parameters.

4. Method according to claim 1, **characterised in** that said entitlement updates data are containing a time information and that said receiver device delivers no descrambling information to said decoder means, if the last evaluated time information is not greater than the time information evaluated before.

## Patentansprüche

1. Verfahren zur Zugriffs-Steuerung, bei dem verwürfelte Video- und/oder Audiosignale zusammen mit kryptografisch geschützten Daten über Dekodermittel (15) zu einer Empfängervorrichtung (11) - zum Beispiel eine Smart-Karte - übertragen (16) werden, wobei die Daten (13) bezogene Parameter zum Entwürfeln und Berechtigungs-Aktualisierungen für die spezifische Empfängervorrichtung oder andere Empfängervorrichtungen enthalten, **dadurch gekennzeichnet,**
daß die Empfängervorrichtung (11) wenigstens einmal in einer vorgegebenen Zeitperiode prüft, ob irgendeine Berechti-gungs-Aktualisierung empfangen wird, die Empfängervorrichtung sonst keine Entwürfelungs-Information (14) an die Dekodermittel (15) liefert und/oder
- daß die Berechtigungs-Aktualisierungen ein Datenfeld enthalten, das sich mit der Zeit entwickelt, und die Empfängervorrichtung (11) keine Entwürfelungs-Information (14) an die Dekoder-mittel (15) liefert, wenn sie keine entsprechende Entwicklung zwischen zwei aufeinanderfolgenden Datenfeldern feststellt.

2. Verfahren nach Anspruch 1, **dadurch gekennzeichnet**, daß das Datenfeld eine Übertragung der gegenwärtigen Ortszeit ist.

3. Verfahren nach Anspruch 1, **dadurch gekennzeichnet**, daß das Datenfeld eine Kopie von einem oder mehreren Bytes der Verwürfelungs-Parameter ist.

4. Verfahren nach Anspruch 1, **dadurch gekennzeichnet**, daß die Berechtigungs-Aktualisierungen eine Zeitinformation enthalten, und daß die Empfängervorrichtung keine Entwürfelungs-Information an die Dekodermittel liefert, wenn die zuletzt ausgewertete Zeitinformation nicht größer als die zuvor ausgewertete Zeitinformation ist.

## Revendications

1. Méthode de contrôle d'accès, dans laquelle des signaux vidéo et/ou audio brouillés ainsi que des données protégées cryptographiquement sont émises (16) par l'intermédiaire d'un moyen de décodage (15) vers un dispositif de réception (11) - p. ex. une carte intelligente - les données (13) contenant des paramètres associés de débrouillage et des mises à jour de droits pour ce dispositif de réception spécifique ou d'autres dispositifs de réception,
caractérisée en ce que:
- ledit dispositif de réception (11) vérifie au moins une fois au cours d'une période de temps prédéterminée, si une mise à jour quelconque de droits a été reçue, sinon ledit dispositif de réception ne fournit aucune information de débrouillage (14) audit moyen de décodage (15) et/ou
- lesdites mises à jour de droits contiennent un champ de données qui évolue avec le temps et ledit dispositif de réception (11) ne fournit aucune information de débrouillage (14) audit moyen de décodage (15), s'il ne détecte aucune évolution entre deux champs successifs desdits champs de données.

2. Méthode selon la revendication 1, caractérisée en ce que ledit champ de données est une transcription du temps local en cours.

3. Méthode selon la revendication 1, caractérisée en ce que ledit champ de données est une copie d'un ou plusieurs octet(s) desdits paramètres de brouillage.

4. Méthode selon la revendication 1, caractérisée en ce que lesdites données de mises à jour de droits contiennent une information de temps et en ce que ledit dispositif de réception ne fournit aucune information de débrouillage audit moyen de décodeur, si la dernière information de temps évaluée n'est pas supérieure à l'information de temps évaluée avant.
